# FASCICULE DE BREVET EUROPEEN

(11) **EP 0 394 099 B1**
(45) Date de publication et mention de la délivrance du brevet: **08.12.1993**
(21) Numéro de dépôt: 90400995.8
(22) Date de dépôt: 11.04.1990
(51) Int. Cl.: F21V 8/00, F21V 19/04

(54) **Dispositif d'illumination d'un faisceau de fibres optiques**
Beleuchtungsvorrichtung für ein optisches Faserbündel
Lighting device for an optical fibre bundle

(30) Priorité: 20.04.1989 FR 8905253
(43) Date de publication de la demande: 24.10.1990
(73) Titulaire: SOCIETE D'ETUDES POUR LE DEVELOPPEMENT DES PRODUCTIONS ELECTRONIQUES société anonyme, 78372 Plaisir Cédex (FR)
(72) Inventeur: Le Gars, Jacques, F-78950 Gambais (FR)
(74) Mandataire: Rodhain, Claude

(56) Documents cités:
- EP-A- 0 302 737
- FR-A- 2 533 017
- GB-A- 2 041 187
- US-A- 3 683 167
- US-A- 4 461 974

## Description

La présente invention concerne une source lumineuse destinée à alimenter en lumière toutes les fibres optiques d'un faisceau de fibres optiques. Un tel dispositif est placé à l'entrée du faisceau et la lumière reçue par chaque fibre optique est transmise jusqu'à son extrémité de sortie. Le faisceau de fibres optiques ainsi obtenu peut être utilisé par exemple à des fins d'affichage.

Pour que la lumière pénètre bien dans chacune des fibres optiques, il faut que son angle d'incidence par rapport à l'axe de la fibre soit réduit ; par ailleurs, il est nécessaire que toutes les fibres soient éclairées de manière uniforme, afin qu'elles transmettent sensiblement la même quantité de lumière.

Lorsqu'il faut illuminer un faisceau de fibres optiques comportant un nombre important de fibres, il est nécessaire, pour obtenir un bon résultat, de diviser le faisceau en plusieurs groupes de fibres qui sont rassemblées dans un manchon constituant un harnais, comme décrit dans le document US-A-3.683.167, chaque manchon étant éclairé par une anpoule électrique. Ainsi par exemple, lorsque l'on veut illuminer un faisceau de 400 fibres optiques, on les divise en deux ensembles de 200 fibres qui sont assemblées dans un demi harnais, chacun des ensembles étant éclairé par une ampoule électrique distincte comme décrit dans le document GB-A-2.041.187.

Ce dispositif est assez complexe, puisqu'il nécessite la division du faisceau en plusieurs parties comportant chacune un manchon et une lampe séparés. De plus, ce dispositif a une fiabilité très faible, puisqu'en cas de panne d'une lampe, le demi-faisceau correspondant n'est plus éclairé ; enfin, la consommation électrique est relativement importante, puisque l'on utilise deux ampoules de puissance relativement élevée (50 Watts).

Par ailleurs, l'ampoule présentant des défauts d'homogénéité, ceux-ci se répercutent sur le faisceau qu'elle émet, si bien que l'on n'a pas la répartition homogène de la lumière émise sur l'ensemble des fibres optiques.

La présente invention a pour objet un dispositif d'illumination d'un faisceau de fibres optiques qui permet de réaliser un éclairement homogène des fibres, dont la fiabilité est accrue, et dont le coût est réduit.

Le dispositif d'illumination conforme à la présente invention est notamment remarquable en ce qu'il est constitué d'au moins trois ampoules électriques de faible puissance et à faible divergence qui sont disposées autour de l'axe du manchon selon une répartition régulière et avec un angle d'incidence au plus égal à 10°.

L'utilisation d'ampoules à faible divergence à une distance relativement importante du manchon permet d'obtenir un bon rendement, la lumière injectée dans les fibres étant peu atténuée du fait de la faible valeur de l'angle d'incidence.

L'invention permet également d'injecter de la lumière dans l'ensemble du faisceau de fibres optiques, sans avoir à le diviser en deux ce qui simplifie notablement l'encombrement et le prix de revient du dispositif.

L'utilisation de plusieurs ampoules permet évidemment d'augmenter la fiabilité du système, puisque la probabilité pour que toutes les ampoules tombent en panne est très faible. Par ailleurs, la consommation électrique est réduite ; en effet, au lieu d'utiliser deux ampoules de 50 Watts, chacune pour illuminer un demi-faisceau, on peut utiliser seulement trois ampoules de 15 Watts.

L'utilisation de plusieurs ampoules réparties de manière régulière permet d'éliminer les défauts dus aux défauts d'homogénéité des ampoules.

De même, l'utilisation de plusieurs ampoules permet d'augmenter notablement la fiabilité, puisque dans le cas d'un dispositif à trois ampoules, en cas de panne d'une des ampoules, la perte de luminosité n'est que de 33%, ce qui permet d'obtenir encore un fonctionnement correct des faisceaux de fibres.

Dans un premier mode de réalisation de l'invention, on prévoit un dispositif de surveillance du fonctionnement des ampoules qui émet une alarme en cas de déficience des ampoules de manière à ce que l'ampoule déficiente soit remplacée sans qu'il y ait eu interruption du fonctionnement de la source lumineuse.

Selon un autre mode de réalisation, seules deux ampoules sur trois sont allumées, et la troisième ampoule fait office d'ampoule de secours qui est allumée automatiquement en cas de défaillance de l'une des deux autres.

Selon encore un autre mode de réalisation de l'invention, on réalise un éclairage en trichromie en disposant un filtre teinté devant chaque ampoule.

D'autres caractéristiques et avantages de l'invention ressortiront de la description qui suit ainsi que du dessin ci-annexé sur lequel :
- la figure 1 est une vue de profil d'un mode de réalisation de l'invention,
- la figure 2 est une vue frontale illustrant la répartition des ampoules, et
- les figures 3 et 4 illustrent deux modes d'utilisation de l'invention.

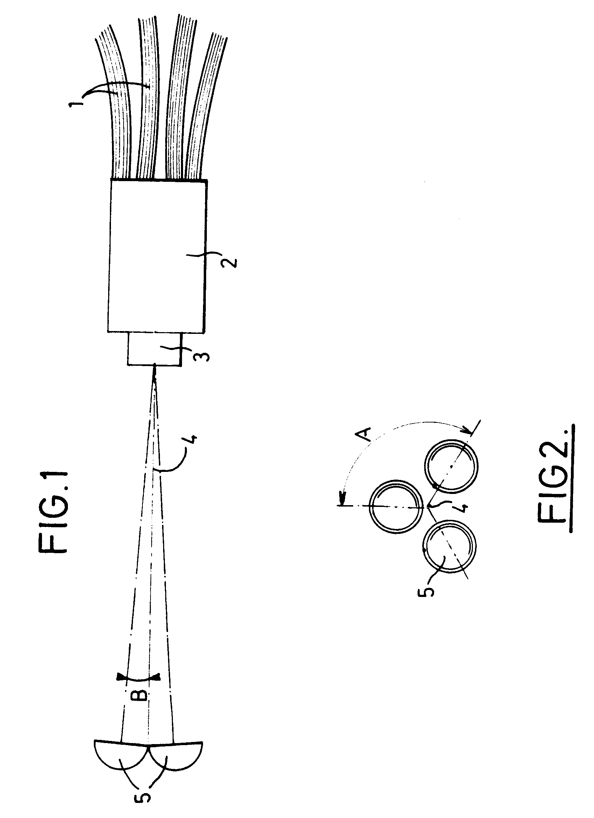

On voit sur la figure 1 un faisceau de fibres optiques qui sont réparties en plusieurs gaines 1, et dont les extrémités sont rassemblées dans un manchon 2 qui présente un embout 3 dans lequel sont logées les extrémités des fibres optiques. Dans le cas d'un dispositif d'affichage, le nombre des fibres optiques peut être relativement élevé, par exemple plusieurs centaines et elles doivent être illuminées de manière homogène de telle sorte que chacune des fibres transmette approximativement la même quantité de lumière.

Conformément à l'invention, l'embout 3 du manchon ou harnais 2 est éclairé par plusieurs ampoules électriques 5, au moins trois, qui sont réparties de manière régulière autour de l'axe 4 dudit manchon. Dans l'exemple représenté, on a utilisé trois ampoules 5 qui, comme on peut le voir sur la figure 2, sont disposées régulièrement autour de l'axe 4 du manchon 2 ; dans ce cas, l'écart angulaire A entre les axes de deux ampoules voisines est égal à 120°. Les trois ampoules 5 sont des ampoules à faible divergence et leur lumière peut donc être concentrée sur l'embout 3 du manchon 2, la distance des ampoules par rapport au manchon 3 est déterminée de manière que l'angle d'incidence B de chacune des ampoules soit au plus égal à 10°. On obtient de cette manière un éclairage suffisant de l'embout 3, ce qui permet d'utiliser un seul manchon ou harnais pour illuminer un grand nombre de fibres optiques. Par exemple l'utilisation de trois ampoules à faible divergence de 15 W chacune permet d'illuminer de manière suffisante un ensemble de 400 fibres optiques dont les extrémités sont réunies dans un seul manchon ou harnais.

Par ailleurs, le fait d'utiliser plusieurs ampoules pour illuminer le faisceau de fibres optiques permet de compenser les défauts d'homogénéité du faisceau fournit par chaque ampoule.

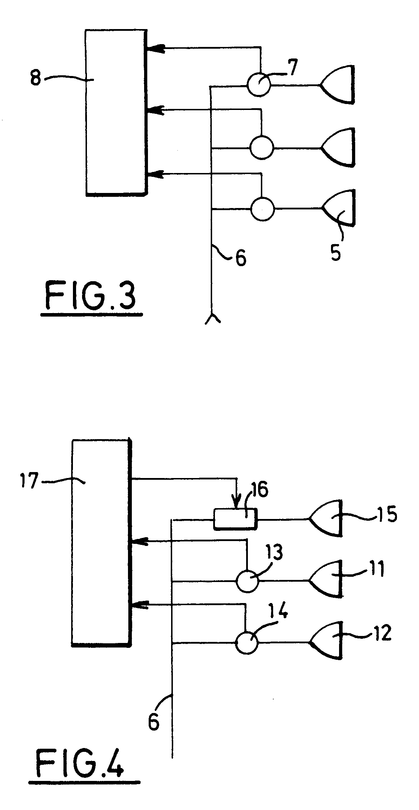

La figure 3 illustre une première application de l'invention, qui permet d'améliorer la maintenance d'un tel dispositif d'illumination d'un faisceau de fibres optiques. Comme on peut le voir sur cette figure 3, chaque ampoule 5 est alimentée par une ligne d'alimentation 6 et on prévoit pour chaque ampoule un dispositif de surveillance de son bon fonctionnement tel qu'un détecteur de courant 7 branché en série dans l'alimentation de l'ampoule. Les informations fournies par chacun des dispositifs de surveillance 7 sont fournies à un dispositif d'alarme 8 qui engendre un signal d'alarme dès que l'une des ampoules 5 ne fonctionne plus. Le faisceau de fibres optiques ne reçoit plus que les deux tiers de l'éclairement initial mais cette perte d'éclairement permet cependant un fonctionnement normal des appareils utilisant les différentes fibres optiques. L'alarme fournie par l'appareil 8 alerte le personnel de maintenance qui remplace aussitôt l'ampoule défectueuse sans qu'il n'y ait eu interruption du service des appareils utilisant les fibres optiques.

Dans un autre mode d'utilisation représenté sur la figure 4, deux ampoules 11 et 12 comportent un détecteur de surveillance 13 respectivement 14 dans leur ligne d'alimentation et la troisième ampoule 15 constitue une ampoule de réserve commandée par un interrupteur 16 disposé dans son circuit d'alimentation. Un dispositif de commande 17 reçoit les signaux fournis par les détecteurs 13 et 14 et commande l'interrupteur 16. Dans ce cas, une ampoule constitue une ampoule de réserve par rapport aux autres ampoules qui sont alimentées en permanence. Lorsque l'un des détecteurs 13 ou 14 signale une panne sur une des ampoules normales, l'appareil de commande 17 commande la fermeture de l'interrupteur 16 et fournit un signal d'alarme.

De cette manière, le service est également ininterrompu et l'ampoule de réserve 16 remplace l'ampoule normale défaillante jusqu'à ce que celle-ci ait été remplacée. Dans ce cas, l'intensité lumineuse fournie au faisceau de fibres optiques reste sensiblement le même.

Une autre utilisation de l'invention consiste à disposer un filtre teinté devant chaque ampoule ce qui permet, dans le cas d'un dispositif à trois ampoules de réaliser un éclairage en trichromie.

## Revendications

1. Dispositif d'illumination d'un faisceau de fibres optiques dont les extrémités sont rassemblées dans un manchon (2), caractérisé en ce qu'il est constitué d'au moins trois ampoules électriques (5) de faible puissance et à faible divergence qui sont disposées autour de l'axe (4) du manchon (2) selon une répartition régulière et avec un angle d'incidence (A) au plus égal à 10°.

2. Dispositif d'illumination d'un faisceau de fibres optiques selon la revendication 1, caractérisé en ce que l'on prévoit un dispositif (7) de surveillance du fonctionnement pour chacune des ampoules (5), ledit dispositif d'illumination comportant une alarme (8) activée par une information issue du dispositif de surveillance en cas de déficience de l'ampoule correspondante.

3. Dispositif d'illumination d'un faisceau de fibres optiques selon la revendication 1, caractérisé en ce que l'une des ampoules (15) est alimentée par l'intermédiaire d'un interrupteur commandé (16) et en ce que l'on prévoit un dispositif (13, 14) de surveillance du fonctionnement des autres ampoules (11, 12), chaque dispositif de surveillance (13, 14) étant relié à un dispositif (17) de commande de l'interrupteur (16).

4. Dispositif d'illumination d'un faisceau de fibres optiques selon la revendication 1, caractérisé en ce que l'on adjoint à chaque ampoule (5) un filtre coloré.

## Patentansprüche

1. Beleuchtungsvorrichtung mit einem Bündel von Lichtleitfasern, deren Enden in einer Muffe (2) zusammengefaßt sind, dadurch **gekennzeichnet,**
daß sie aus mindestens drei Glühbirnen (5) mit niedriger Leistung und geringer Streuung besteht, die mit einer regelmäßigen Verteilung und mit einem Eintrittswinkel (A) von höchstens 10° um die Achse (4) der Muffe (2) angeordnet sind.

2. Beleuchtungsvorrichtung mit einem Bündel von Lichtleitfasern nach Anspruch 1, dadurch **gekennzeich****net**, daß für jede der Glühbirnen (5) eine Vorrichtung (7) zur Funktionsüberwachung vorgesehen ist, wobei die genannte Vorrichtung eine Warneinrichtung (8) für den Fall des Versagens der entsprechenden Glühbirne umfaßt, die durch eine von der Vorrichtung zur Funktionsüberwachung abgegebene Information aktiviert wird.

3. Beleuchtungsvorrichtung mit einem Bündel von Lichtleitfasern nach Anspruch 1, dadurch **gekennzeich****net**, daß eine der Glühbirnen (15) durch das Zwischenstück eines Fernschalters (16) gespeist wird und daß eine Vorrichtung (13, 14) zur Funktionsüberwachung der anderen Glühbirnen (11, 12) vorgesehen ist, wobei jede Überwachungsvorrichtung (13, 14) mit einer Steuereinrichtung des Fernschalters verbunden ist.

4. Beleuchtungsvorrichtung mit einem Bündel von Lichtleitfasern nach Anspruch 1, dadurch **gekennzeichnet,** daß jeder Glühbirne (5) ein Farbfilter zugeordnet ist.

## Claims

1. Device for illuminating a bundle of optical fibres, the ends of which are collected together in a sleeve (2), characterised in that it consists of at least three low-power electric bulbs (5) with a narrow beam spread, which are disposed about the axis (4) of the sleeve (2) in an even distribution and with an angle of incidence (A) of at least 10°.

2. Device for illuminating a bundle of optical fibres according to Claim 1, characterised in that a device (7) is provided for monitoring the functioning of each of the bulbs (5), the said illuminating device including an alarm (8) activated by an item of data coming from the monitoring device in the event of any deficiency in the corresponding bulb.

3. Device for illuminating a bundle of optical fibres according to Claim 1, characterised in that one of the bulbs (15) is powered through a controlled switch (16) and in that a device (13, 14) is provided for monitoring the functioning of the other bulbs (11, 12), each monitoring device (13, 14) being connected to a device (17) for controlling the switch (16).

4. Device for illuminating a bundle of optical fibres according to Claim 1, characterised in that a coloured filter is associated with each bulb (5).
